# EUROPEAN PATENT APPLICATION

(11) **EP 4 265 348 A1**
(43) Date of publication of application: **25.10.2023**
(21) Application number: 22169310.4
(22) Date of filing: 21.04.2022
(51) Int. Cl.: B09B 3/40, B09B 3/35

(54) **SYSTEM FOR THE TREATMENT, AND STERILIZATION OF HEALTHCARE WASTE**

(30) Priority: 20.04.2022 IT 202200007832
(71) Applicant: Easysterill S.r.l., 16138 Genova (IT)
(72) Inventor: SCIBILIA, Luciano Giovanni, 16138 GENOVA (IT)
(74) Representative: Studio Torta S.p.A.

(57) **Abstract**

A system (1) for the treatment and sterilization of healthcare waste has a loading hopper (6) for loading the healthcare waste, a sterilization unit (17) provided with a heating device for sterilizing the healthcare waste via heat treatment, a shredding unit (8) mounted between the loading hopper (6) and the sterilization unit (17), and an unloading device (25, 27) for receiving the shredded and sterilized healthcare waste from the sterilization unit (17). The loading hopper (6), the shredding unit (8), and the sterilization unit (17) being arranged so as to transfer the healthcare waste directly by gravity from the loading hopper (6) to the shredding unit (8) and from the shredding unit (8) to the sterilization unit (17).

## Description

### TECHNICAL FIELD OF THE INVENTION

The present invention relates to a system for the treatment and sterilization of healthcare waste.

### STATE OF THE ART

In the field of the treatment and sterilization of healthcare waste, healthcare waste is produced in facilities that carry out hospital, medical and veterinary activities involving prevention, diagnosis, treatment, rehabilitation and research.

In particular, healthcare waste defined as "with infection risk" comprises, for example, waste coming from infective isolation areas, disposable healthcare or veterinary materials contaminated by biological fluids, sharp and pungent waste, etc.

For correct disposal, healthcare waste is delivered by operators provided with protective gloves and, if necessary, protective overalls and goggles, to specific containers, often provided by professional disposal firms, made of cardboard (for non-cutting materials), plastic (for pointed or sharp objects), or drums (for liquids).

Once the healthcare waste has been inserted in the containers or drums and labelled, it is firstly stored in warehouses located in the facilities where the waste is produced and then transferred to incineration or sterilization/sanitization disposal systems.

In particular, healthcare waste is subject to specific national and international regulations that govern the management thereof, in particular handling, conservation, packaging, transport, labelling, traceability and disposal.

In other words, the regulations prohibit mixing of healthcare waste with other hazardous or municipal waste and sending to landfill, and recommend treatment in the immediate vicinity of the production facility so as to minimize the movement thereof and consequent public health risk.

The current system for disposal of healthcare waste is centred on disposal by means of incinerators, which are not present in an adequate number in the territory, are not uniformly distributed over the territory, and involve circulation and transport of the healthcare waste over relatively long distances from town to town; alternatively, disposal by means of sterilization/sanitization with the current systems available on the market is uneconomic and cannot be adopted on a relatively continuous basis.

The sterilization/sanitization activities must be carried out in compliance with specific regulations in relation to the sterilizing agent and the process operating parameters and in disposal systems designed to withstand the chemical-physical aggression resulting from the process and/or from the healthcare waste treated.

The management of healthcare waste is expensive, antiecological and hazardous, and the current system for transport of healthcare waste with infection risk from the individual producers to the storage warehouses and subsequently to the disposal systems entails a considerable expenditure of resources and results in a further environmental impact in addition to the impact caused by the healthcare waste itself.

Lastly, it is clear how the transfer of healthcare waste with infection risk from the production site always entails a nonnegligible risk of contamination.

Consequently, the correct management of healthcare waste involves sterilization thereof at the producer's premises. However, the current systems for sterilization of healthcare waste use technologies with characteristics (management complexity, risk, dimensions, energy consumption, etc.) that make their use by unskilled operators difficult, hazardous or anti-economical.

### OBJECT AND SUMMARY OF THE INVENTION

The object of the present invention is to provide a system for the treatment and sterilization of healthcare waste which is free from the drawbacks described above and which is simple and inexpensive to produce, in particular which can be directly installed at the place of production of the healthcare waste so as to eliminate the transfers currently required.

According to the present invention a system for the treatment and sterilization of healthcare waste is provided, as claimed in the attached claims.

### BRIEF DESCRIPTION OF THE DRAWINGS

Figures 1 and 2 are two perspective views of a preferred embodiment of the system of the present invention.
Figure 3 is a schematic perspective view, with parts removed for clarity, of the system of Figures 1 and 2.
Figure 4 is a first schematic side view, with parts in section and parts removed for clarity, of the system of Figures 1 and 2.
Figure 5 is a second schematic side view, with parts in section and parts removed for clarity, of the system of Figures 1 and 2.

### DESCRIPTION OF PREFERRED EMBODIMENTS OF THE INVENTION

The present invention will now be described in detail with reference to the attached figures to allow a person skilled in the art to produce it and use it. Various modifications to the embodiments described will be immediately evident to persons skilled in the art and the general principles described can be applied to other embodiments and applications without departing from the scope of the present invention, as defined in the attached claims. Therefore, the present invention shall not be considered limited to the embodiments described and illustrated, but shall be accorded the widest scope in accordance with the characteristics described and claimed.

Where not defined otherwise, all the technical and scientific terms used here have the same meaning commonly used by persons of ordinary experience in the field of the present invention. In the event of conflict, the present description, including the definitions provided, will be binding. Furthermore, the examples are provided for purely illustrative purposes and as such shall not be considered limiting.

In order to facilitate the understanding of the embodiments described here, reference will be made to some specific embodiments and a specific language will be used to describe the same. The terminology used in the present document has the purpose of describing only particular embodiments, and is not designed to limit the scope of the present invention.

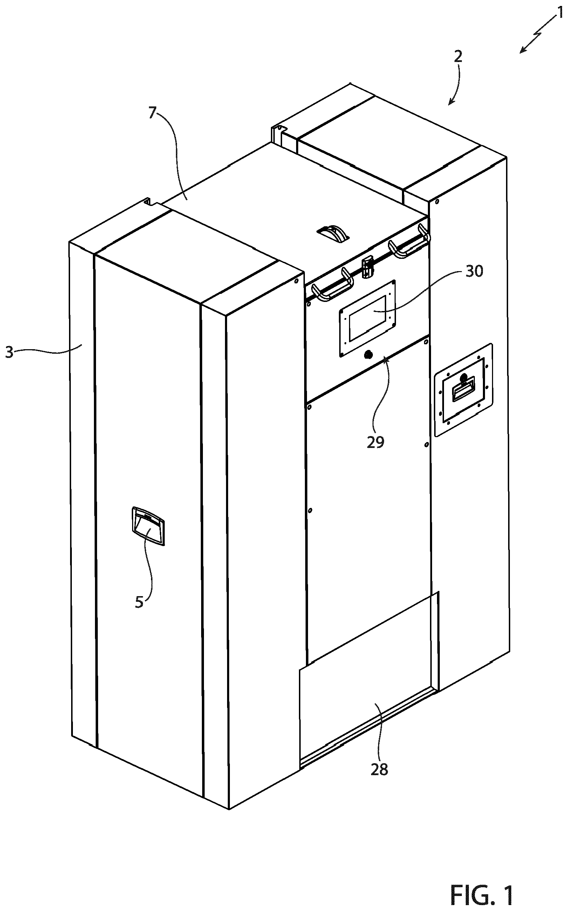

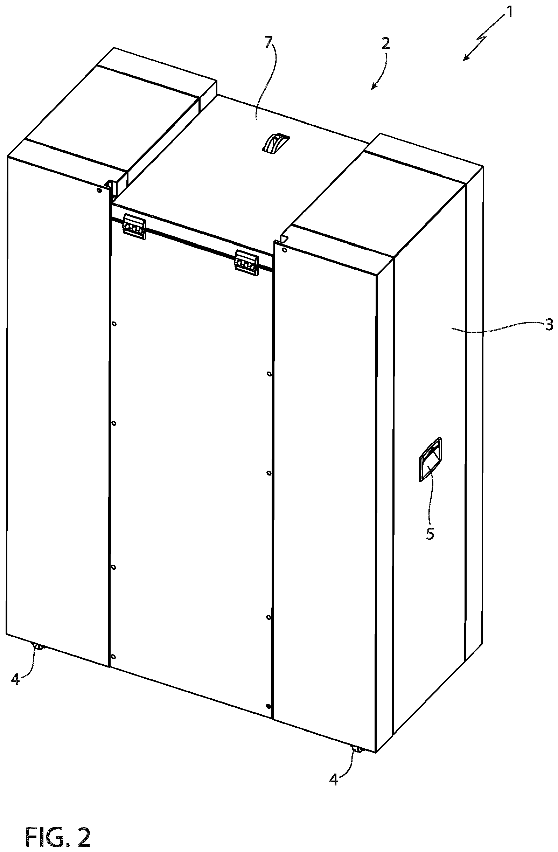

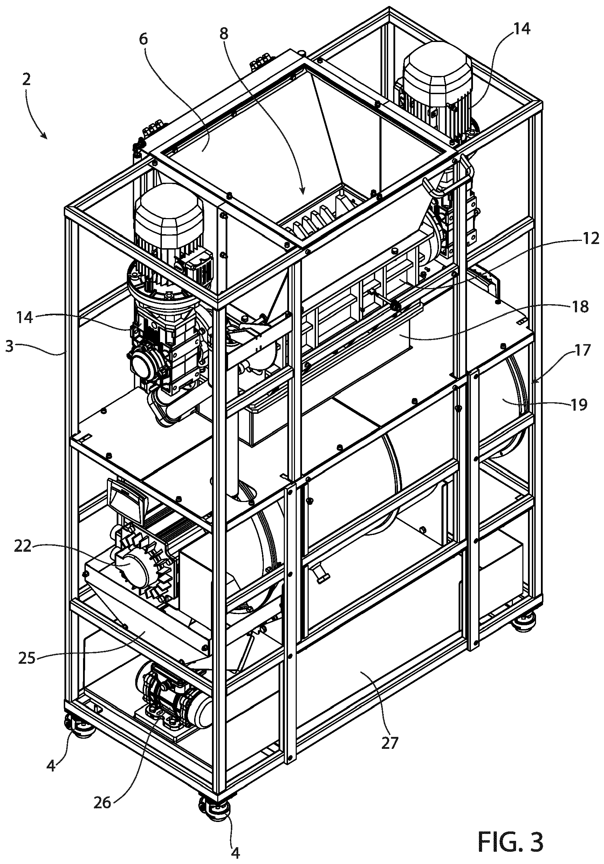

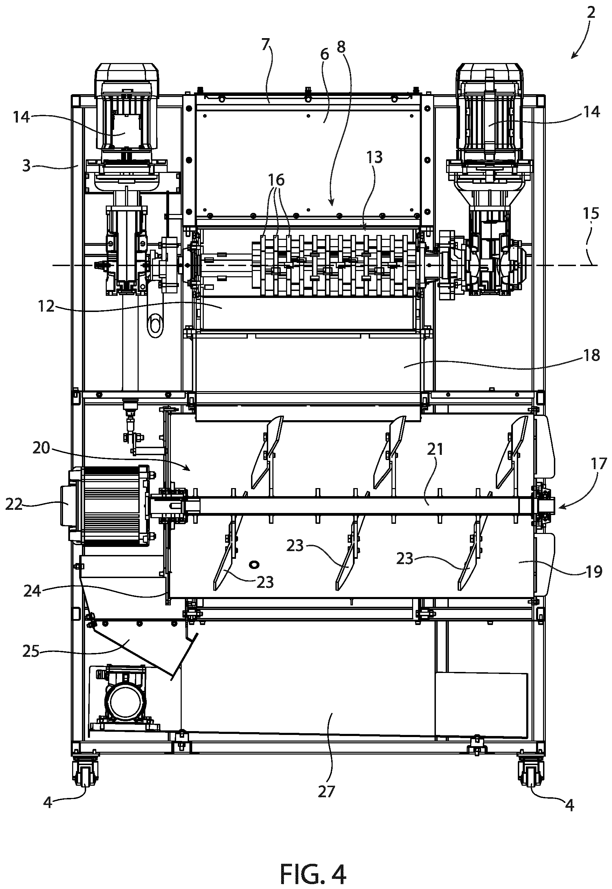

With reference to Figures 1, 2, 3, 4 and 5, the number 1 denotes, as a whole, a system for the treatment and sterilization of healthcare waste known and not shown.

The system 1 comprises equipment 2 for the treatment and sterilization of healthcare waste, and a power-supply unit (not illustrated), in particular with photovoltaic panels, to electrically power the equipment 2.

The equipment 2 comprises a box-shaped frame 3, which has a parallelepipedal shape, is provided with a plurality of lower carriages 4 for movement of the equipment 2, and is further provided with a gripping handle 5 to allow the operators in charge to easily move the equipment 2 itself.

The equipment 2 further comprises an upper loading hopper 6 designed to receive the healthcare waste inserted in relative packaging envelopes provided with respective identification codes.

The hopper 6 is closed at the top by a closing door 7 and at the bottom by a shredding unit 8 for shredding the healthcare waste, and is provided with an internal bulkhead 9 hinged to an inner wall 10 of the hopper 6 to rotate, under the thrust of an operating device not illustrated, around a substantially horizontal fulcrum axis 11.

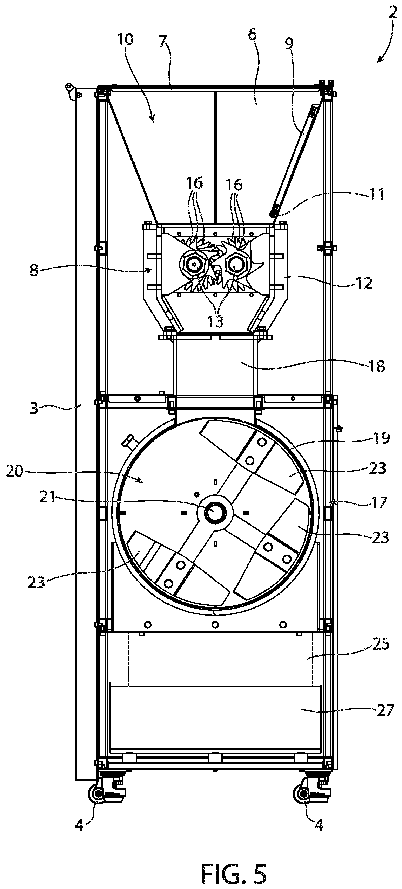

The bulkhead 9 is movable between an operating position (not illustrated), in which the bulkhead 9 squashes and crushes the healthcare waste against the unit 8, and a rest position (Figure 5), in which the bulkhead 9 is arranged parallel to the wall 10 to allow the feeding of the healthcare waste itself.

The door 7 is provided with a detection device (not illustrated) to detect the presence of any radioactive healthcare waste, and a UV lamp (not illustrated) for sanitization of the hopper 6 and the unit 8.

The unit 8 comprises a containment chamber 12, which is connected to the hopper 6, and houses inside it two cutting shafts 13 mounted to rotate, with respect to the frame 3 and under the thrust of an operating device 14, around respective rotation axes 15 parallel to each other and to the axis 11.

Each shaft 13 is provided with a plurality of cutting blades 16, which are distributed along and around the relative axis 15, and cooperate with the blades 16 of the other shaft 13 in order to shred the healthcare waste.

The equipment 2 further comprises a sterilization unit 17, which is mounted below the unit 8, and is connected to the unit 8 by means of a feed duct 18 provided with an electric resistance heating device (not illustrated) configured to increase the temperature of the healthcare waste fed to the unit 17.

The unit 17 comprises a cylindrical shaped containment chamber 19, which is fixed to the frame 3, is provided with an opening (not illustrated) connected to the duct 18, and is provided with a heating device (not illustrated), in this case a pair of electric resistances, configured to guarantee a sterilization temperature of at least 140° inside the chamber 19.

The chamber 19 houses inside it a blade mixer 20 comprising a drive shaft 21, which is mounted to rotate under the thrust of an operating device 22 around a rotation axis 21a parallel to the axes 15, and supports a plurality of mixing blades 23 distributed along the shaft 21 itself.

The shaft 21 is moved by the device 22 around the axis 21a with a reciprocating rotary motion both clockwise and anticlockwise so as to move the blades 23 and, therefore, the healthcare waste with a reciprocating rectilinear motion along the axis 21a itself.

The reciprocating rotary motion of the shaft 21 around the axis 21a is combined with the sterilization temperature inside the chamber 19 for a time interval at least equal to a threshold value, in this case six minutes.

Once sterilized, the healthcare waste is fed by the blades 23 to an end opening 24 of the chamber 19 connected to a lower discharge hopper 25, which is vibrated by a vibrator device 26 to facilitate the fall by gravity of the healthcare waste.

The equipment 2 comprises, lastly, a collecting bin 27, which is mounted below the hopper 25, is provided with a collecting bag (not illustrated) for the healthcare waste, and is provided with a closing door 28 designed to allow extraction of the bin 27 and/or the collecting bag (not illustrated).

From the above, it follows that the upper loading hopper 6, the shredding unit 8, the sterilization unit 17, and the feed duct 18 are aligned with one another in a substantially vertical direction and that, consequently, the healthcare waste is fed directly by gravity from the hopper 6 to the unit 8 and from the unit 8 to the unit 17 along the duct 18.

The equipment 2 is furthermore provided with:
- a reading device (not illustrated), which reads the identification codes applied on the healthcare waste loaded in the hopper 6 and records the data relative to the place of production of the healthcare waste itself;
- a drainage device (not illustrated) of the chamber 19 to discharge a residue deriving from sterilization of the healthcare waste in the unit 17 into the sewage system or into disposable collecting containers;
- a weighing device (not illustrated) for weighing the healthcare waste; and/or
- a distribution device (not illustrated) for feeding deodorizing agents into the sterilized healthcare waste in the unit 17.

The system 1 is further provided with an electronic control unit 29 configured to record each operating cycle of the equipment 2 and print upon request a report of the operating cycle containing, in particular, data relative to identification of the manufacturer, date and time, serial number of the system 1, identification code of the selected sterilization programme, progressive number of the operating cycle, weight of the healthcare waste, place of production of the healthcare waste, and the presence of any radioactive healthcare waste.

The unit 29 is furthermore configured to detect the operating cycle step in progress (loading, shredding, sterilization, discharge), step duration, value of the process variable, date and time of cycle end, completion and validity of the operating cycle.

The safety of the system 1 is both active and passive; in particular the areas designed for transit and transformation of the healthcare waste are provided with sealed compartments.

The outer walls of the frame 3 are treated with antibacterial paint, are insulated so that they do not exceed 35°C with respect to the ambient temperature, and are provided with thermoacoustic insulation in order to limit the sound emissions of the system 1 below a relatively low threshold value.

To verify the effectiveness and efficiency of the system 1, a control procedure has been defined which entails the contamination of a test load (not illustrated) and analysis thereof at the end of the operating cycle of the equipment 2.

For example, direct contamination of the test load is carried out by means of flasks containing, for example, growth medium, sugar, a pH indicator, and spores of contaminant/bioindicator agent.

In use, the flasks are subjected to autoclaving and incubation and show results coded, for example, according to a colour code, in particular a red-violet code to indicate correct sterilization and a yellow-orange code to indicate inadequate sterilization. The reliability of the response obtained allows for simple rapid monitoring of the autoclaving process and, if necessary, the adoption of corrective measures to avoid thermal risks.

The system 1 is selectively controlled by a single operator, who manages the step of loading the healthcare waste into the upper loading hopper 6 and the step of discharging the healthcare waste from the collecting bin 27, and controls the steps of the sterilization treatment.

In this regard, it is expedient to specify that the electronic control unit 29 is associated with a touch-screen type control panel 30, via which the operator enters data, verifies the operation of the system 1, and receives messages confirming that the sterilization has been performed, namely valid cycle or aborted cycle.

The panel 30 therefore allows the operator to select the sterilization cycle and display the steps of the selected operating cycle.

The system 1 is furthermore provided with a plurality of sensors (not illustrated) to control correct execution of the sterilization cycle, and a plurality of illuminated devices (not illustrated) of analog and/or digital type designed to signal to the operator, for example, closing of the door 7, cycle in progress, cycle completed, cycle aborted, number of operating cycles, and the instantaneous state of the cycle steps.

From the above it follows that the sterilization operating cycle performed by the system 1 comprises the steps of:
- weighing the healthcare waste;
- inserting in the upper hopper 6 the healthcare waste arranged inside relative packaging envelopes;

- detecting the identification codes applied on the healthcare waste;
- closing the door 7 and the bulkhead 9, activating the detection device (not illustrated) to detect the presence of any radioactive healthcare waste, and activating the UV lamp (not illustrated) for sanitization of the hopper 6 and the unit 8;
- feeding deodorizing agents into the healthcare waste;
- shredding the healthcare waste by means of the unit 8 when the unit 29 detects the absence of radioactive healthcare waste;
- transferring the healthcare waste into the unit 17;
- activating the blade mixer 20; and
- feeding the sterilized healthcare waste firstly to the lower hopper 25 and, then, into the collecting bin 27.

The system 1 has some advantages, deriving mainly from the fact that the equipment 2 is relatively simple and inexpensive, has relatively compact overall dimensions, is configured to treat and sterilize the healthcare waste directly at the place of production, records the single pieces of healthcare waste tracing the origin thereof according to place of production, weight, and verification of radioactivity, and is configured to transfer by gravity the healthcare waste from the loading hopper 6 to the shredding unit 8 and from the shredding unit 8 to the sterilization unit 17.

The system 1 therefore avoids the use of facilities and personnel for storage and transport of the healthcare waste, reducing the environmental impact connected to the transfer of the healthcare waste from the place of production to a separate treatment and sterilization system.

Consequently, the system 1 has a relatively simple management and a relatively high safety level, and involves a relatively low number of handling operations and environmental and energy impact.

## Claims

1. A system for the treatment and sterilization of healthcare waste, the system comprising equipment (2) in turn comprising a loading hopper (6) for loading the healthcare waste; a sterilization unit (17) provided with a heating device for sterilizing the healthcare waste by means of heat treatment at a given temperature and for a given time interval; a shredding unit (8) mounted between the loading hopper (6) and the sterilization unit (17) to receive at the inlet the healthcare waste from the loading hopper (6) and to release at the outlet the healthcare waste to the sterilization unit (17); and an unloading device (25, 27) to receive the shredded and sterilized healthcare waste from the sterilization unit (17); **characterized in that** the loading hopper (6), the shredding unit (8), and the sterilization unit (17) are arranged so as to transfer the healthcare waste directly by gravity from the loading hopper (6) to the shredding unit (8) and from the shredding unit (8) to the sterilization unit (17).

2. The system according to claim **1,** wherein the shredding unit (8) is arranged below the loading hopper (6) and above the sterilization unit (17).

3. The system according to claim **1** or **2,** wherein the loading hopper (6), the shredding unit (8), and the sterilization unit (17) are aligned with one another in a vertical direction.

4. The system according to any one of the preceding claims, wherein the loading hopper (6) is provided with an internal bulkhead (9) movable between an operating position in which it squashes and crushes the healthcare waste against the shredding unit (8) and a rest position.

5. The system according to any one of the preceding claims, wherein the shredding unit (8) comprises a containment chamber (12) connected to the loading hopper (6), and a cutting device (13) mounted in the containment chamber (12) for shredding the healthcare waste.

6. The system according to any one of the preceding claims, wherein the sterilization unit (17) comprises a containment chamber (19), and a blade mixer (20) mounted in the containment chamber (19).

7. The system according to claim **6** when dependent upon claim 5, wherein the equipment (2) further comprises a feed duct (18), which connects the containment chamber (12) of the shredding unit (8) and the containment chamber (19) of the sterilization unit (17) to each other, and is provided with a heating device for heating the healthcare waste fed along the feed duct (18).

8. The system according to claim **6** or **7,** wherein the blade mixer (20) comprises a drive shaft (21), a plurality of mixing blades (23) mounted on the drive shaft (21), and an operating device (22) to move the drive shaft (21) with a reciprocating rotary motion around a rotation axis (21a) thereof and, therefore, the mixing blades (23) and the healthcare waste with reciprocating motion along the rotation axis (21a).

9. The system according to any one of the preceding claims, wherein the unloading device (25, 27) comprises an unloading hopper (25) designed to receive the healthcare waste from the sterilization unit (17), and a vibrator device (26) to impart a vibratory motion to the unloading hopper (25).

10. The system according to any one of the preceding claims and further comprising a power-supply unit, in particular with photovoltaic panels, to electrically power the equipment (2).

11. The system according to any one of the preceding claims, wherein the equipment (2) further comprises a reading device, which reads the identification codes applied on the healthcare waste loaded in the loading hopper (6) and records the data relative to the place of production of the healthcare waste.

12. The system according to any one of the preceding claims, wherein the equipment (2) further comprises a weighing device for weighing the healthcare waste.

13. The system according to any one of the preceding claims, wherein the equipment (2) further comprises a distribution device for feeding deodorizing agents into the healthcare waste sterilized in the sterilization unit (17).

14. The system according to any one of the preceding claims, wherein the equipment (2) further comprises a detection device for detecting the presence of any radioactive healthcare waste.

15. The system according to any one of the preceding claims and further comprising an electronic control unit (29) for selectively controlling operation of the equipment (2).
